# EUROPÄISCHE PATENTSCHRIFT

(11) **EP 3 625 448 B1**
(45) Veröffentlichungstag und Bekanntmachung des Hinweises auf die Patenterteilung: **31.07.2024**
(21) Anmeldenummer: 18719040.0
(22) Anmeldetag: 16.04.2018
(51) Int. Cl.: F02M 35/10, F02M 35/02

(54) **VERBRENNUNGSMOTOR MIT ÄUSSERER GEMISCHBILDUNG UND AUSGLEICHSBEHÄLTER ZUR VERMEIDUNG VON RÜCKZÜNDUNG**
INTERNAL COMBUSTION ENGINES WITH EXTERNAL MIXTURE FORMATION AND COMPENSATION VESSEL FOR AVOIDING RE-IGNITION
MOTEURS À COMBUSTION AVEC FORMATION DE MÉLANGE EXTERNE ET RÉSERVOIRS DE COMPENSATION POUR ÉVITER LE RETOUR DE FLAMMES

(30) Priorität: 19.05.2017 DE 102017004858
(43) Veröffentlichungstag der Anmeldung: 25.03.2020
(73) Patentinhaber: DEUTZ Aktiengesellschaft, 51149 Köln (DE)
(72) Erfinder: NORK, Benedikt, 50858 K ln (DE); BARK, Klaus-Peter, 56307 D rrholz (DE); KIPKE, Peter, 57462 Olpe (DE)
(86) Internationale Anmeldenummer: PCT/EP2018/000205
(87) Internationale Veröffentlichungsnummer: WO 2018/210443

(56) Entgegenhaltungen:
- JP-A- H08 254 162
- US-A- 2 690 331
- US-A- 4 375 204

## Beschreibung

Bei Verbrennungsmotoren mit äußerer Gemischbildung wird vor den Einlassventilen ein entflammbares Luft-Kraftstoffgemisch erzeugt. Dabei kann es zur ungewollten Verbrennung im Saugrohr des Motors ("Back-Fire") kommen. Je größer das Saugrohr und je größer die Masse an zündfähigem Gemisch vor den Einlassventilen ist, desto größer ist das Risiko eines Schadens.

Aus der JP H08 254162 A ist eine Brennkraftmaschine bekannt mit einem Ausgleichsbehälter, der durch zwei hintereinander angeordnete Volumina gebildet ist. Der Einlass des Ausgleichsbehälters liegt auf einer ersten Seite und der Auslass liegt auf einer gegenüberliegenden zweiten Seite.

Derartige Rückzündungsschutzvorrichtungen sind bekannt aus der KR 20010108884 A, bei der eine von innen liegenden Schraubenfedern gehaltene Ventilplatte für einen eventuellen Druckausgleich sorgen soll.

Weiter sind derartige Rückzündungsschutzvorrichtungen auch aus der KR 20020041902 A bekannt, bei der außen liegende Schraubenfedern für einen eventuellen Druckausgleich sorgen sollen, indem sie den Luftfiltergehäusedeckel gegen den Luftfilterboden hin abdichten.

Aus der US 20060005808 A1 ist bekannt, dass Rückzündung mittels einer Drosselklappe verhindert werden soll.

Die EP 1971763 B1 offenbart einen Drucksensor zur Ermittlung einer Rückzündung und der anschließenden Ansteuerung einer Drosselklappe zum Druckabbau.

In der DE 2526550 A1 wird ein Nebenauslass gezeigt, der Druckanstiege bei Rückzündungen verhindern soll.

Zur Kühlung der Rückzündung schlägt die JP 57181964 A den Einsatz eines Metallgewebes vor.

Aus der WO 9966189 A1 ist ein Deckel im Ansaugsystem einer Brennkraftmaschine mit einer Sollbruchstelle für den Fall der Rückzündung offenbart.

In der EP 715684 B1 wird ein kleineres Ansaugsystem vorgeschlagen, um Rückzündungen zu vermeiden.

EP 2054589 B1 offenbart ein Druckregelventil zur Vermeidung von Rückzündungen.

Die EP 1647684 A2 offenbart strömungstechnische Lösungsansätze an einem wasserstoffbetriebenem Verbrennungsmotor, um Rückzündungen zu vermeiden.

Aus der DE 10145195 B4 ist ein Strömungsgleichrichter bekannt, der in einem Ansaugkanal angeordnet ist.

Das nachträgliche Einblasen von Luft in den Ansaugtrakt soll gemäß DE 102004037971 A1 die Gefahr einer Rückzündung vermindern.

Nachteilig daran ist, dass bei den oben genannten Vorschlägen ein hoher konstruktiver Aufwand betrieben wird, um die Rückzündungen bzw. deren Auswirkungen zu minimieren.

Es ist die Aufgabe der vorliegenden Erfindung, eine Vorrichtung und ein Verfahren zu schaffen, die die oben genannten Nachteile vermeiden und die Ansaugstrecke kostengünstig und zuverlässig vor Beschädigung schützen sollen.

Gelöst wird die Aufgabe durch eine Vorrichtung gemäß Anspruch 1 und ein Verfahren nach Anspruch 11. Hierbei ist von Vorteil, dass Rückzündungen und deren Auswirkungen nicht in den Luftfilter vordringen können.

Eine vorteilhafte Weiterbildung sieht vor, dass die Drosselklappe zwischen dem Saugrohr und der Gemischbildungsvorrichtung angeordnet ist.

Eine weitere vorteilhafte Weiterbildung sieht vor, dass die Gemischbildungsvorrichtung als Gas-Mischer ausgeführt ist.

Eine andere vorteilhafte Weiterbildung sieht vor, dass die Gemischbildungsvorrichtung als Vergaser ausgeführt ist.

Weiter ist vorteilhafterweise vorgesehen, dass der Ausgleichsbehälter treppenstufenförmig ausgebildet ist.

Eine vorteilhafte Weiterbildung sieht vor, dass das Verhältnis vom Einlass des Ausgleichsbehälters zum Auslass etwa 58/80 beträgt.

Eine weitere vorteilhafte Weiterbildung sieht vor, dass die Gemischbildungsvorrichtung und der Ausgleichsbehälter mittels eines flexiblen Rohrelementes verbunden sind.

Eine andere vorteilhafte Weiterbildung sieht vor, dass zwischen Ausgleichsbehälter und Gemischbildungsvorrichtung wenigstens ein Strömungsgleichrichter angeordnet ist.

Durch Installieren eines Ausgleichsbehälters, also eines Luftvolumens zwischen Luftfilter und gemischbildendem System (Vergaser, Luft-Gas-Mischer), kann die schädliche Wirkung des "Back-Fires" entscheidend reduziert werden. Die sich infolge der Verbrennung ("Back-Fire" / Rückzündung) entgegen der üblichen Strömungsrichtung ausdehnenden heißen Verbrennungsgase werden im Ausgleichsbehälter mit nichtbrennbarer Frischluft vermischt und gekühlt und die "Back-Fire" Druckwelle wird abgebaut.

Gegenstand dieses Patentes ist der beschriebene und unten skizzierte Ausgleichsbehälter. Dieser kann auch durch geschickte innere Gestaltung zu einer Reflektion der Druckwelle an den Behälterwänden führen, die die Verringerung der Druckwelle und die Ausbreitung der heißen Verbrennungsgase weiter reduzieren kann.

Zur weiteren Reduktion der schädlichen Wirkung eines "Back-Fires" (Rückzündung) kann ein Strömungsgleichrichter installiert werden. Dieser Strömungsgleichrichter besteht aus einem mehr oder weniger dichtem Metallgitter oder Netz. Dieses engmaschige Gitter wird in das Ansaugsystem in Strömungsrichtung vor das gemischbildende System installiert. Im Falle eines "Back-Fires" muss die sich entgegen der normalen Strömungsrichtung ausbreitende Flamme den Strömungsgleichrichter passieren. Durch das engmaschige Metallgitter wird die Flamme signifikant abgekühlt. Somit werden Schäden am luftführenden System vermieden.

Als weiterer Vorteil der hier dargestellten Kombination, bestehend aus Ausgleichsbehälter und Strömungsgleichrichter, ist deren reduzierende Wirkung auf Gaspulsationen im Saugrohr zu nennen. Jeder ventilgesteuerte Hubkolbenmotor erzeugt Pulsationen im Saugrohr. Diese Pulsationen können ggf. die Gemischbildung negativ beeinflussen. Allein der Ausgleichsbehälter reduziert die Amplitude der Druckpulse signifikant. Bei Verwendung vom Ausgleichsbehälter in Kombination mit einem Strömungsgleichrichter werden diese Druckpulse weiter reduziert. Somit kann eine verbesserte Gemischbildung erfolgen. Motorleistung und Drehmoment können gesteigert werden bei gleichzeitiger Reduktion schädlicher Abgasemissionen.

Die Erfindung wird nachfolgend anhand der in den Zeichnungen dargestellten Ausführungsbeispiele erläutert. Es zeigen:
- Figur 1: eine Brennkraftmaschine mit Strömungsgleichrichter und Ausgleichsbehälter vor dem Vergaser,
- Figur 2: eine Brennkraftmaschine mit Ausgleichsbehälter vor dem Vergaser,
- Figur 3: einen treppenförmigen Ausgleichsbehälter,
- Figur 4: einen Temperatur- bzw. Druckverlauf im Saugrohr ohne Ausgleichsbehälter,
- Figur 5: einen Temperatur- bzw. Druckverlauf im Saugrohr mit Ausgleichsbehälter,
- Figur 6: eine tabellenartige Gegenüberstellung mit und ohne Ausgleichsbehälter.

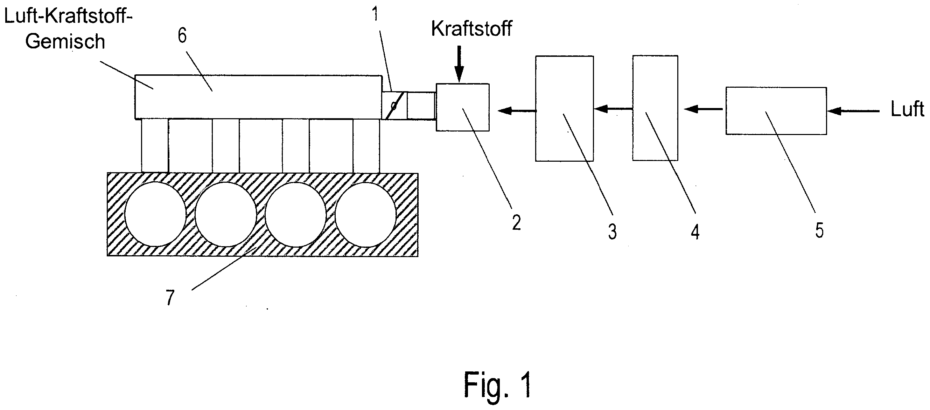

In Figur 1 wird eine Brennkraftmaschine 7 mit einem Strömungsgleichrichter 3 und einem Ausgleichsbehälter 4, die in Strömungsrichtung vor dem Vergaser 2 angeordnet sind, dargestellt. Die angesaugte Ansaugluft der Brennkraftmaschine 7 passiert den Luftfilter 5, um anschließend über den Ausgleichsbehältereinlass 8 in den treppenförmig ausgestalteten Ausgleichsbehälter 4 zu gelangen. Die Ansaugluft, die sich im Ausgleichsbehälter 4 befindet, gelangt über den Ausgleichsbehälterauslass 9, dessen Durchmesser größer ist als der des Ausgleichsbehältereinlasses 8, in den Strömungsgleichrichter 3. Der Strömungsgleichrichter 3 besteht aus einem Strömungsgleichrichtergehäuse und einem Strömungsgleichrichtereinsatz. Der Strömungsgleichrichtereinsatz besteht aus einem engmaschigen Metallgitter. In einer alternativen Ausführungsform besteht der Strömungsgleichrichtereinsatz aus einem wabenartigen Strangpressprofil. Der Strömungsgleichrichtereinsatz besteht vorzugsweise aus einem wärmeleitfähigen Metall wie beispielsweise Kupfer oder Aluminium.

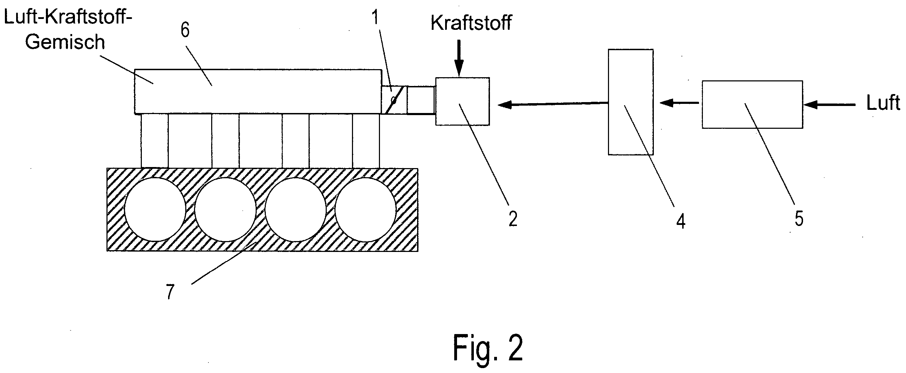

Figur 2 zeigt eine Brennkraftmaschine 7 mit einem Ausgleichsbehälter 4, der in Strömungsrichtung der Ansaugluft vor dem Vergaser 2 angeordnet ist. Die angesaugte Ansaugluft der Brennkraftmaschine 7 passiert den Luftfilter 5, um anschließend über den Ausgleichsbehältereinlass 8 in den treppenförmig ausgestalteten Ausgleichsbehälter 4 zu gelangen. Die Ansaugluft, die sich im Ausgleichsbehälter 4 befindet, gelangt über den Ausgleichsbehälterauslass 9, dessen Durchmesser größer ist als der des Ausgleichsbehältereinlasses 8, in den Vergaser 2.

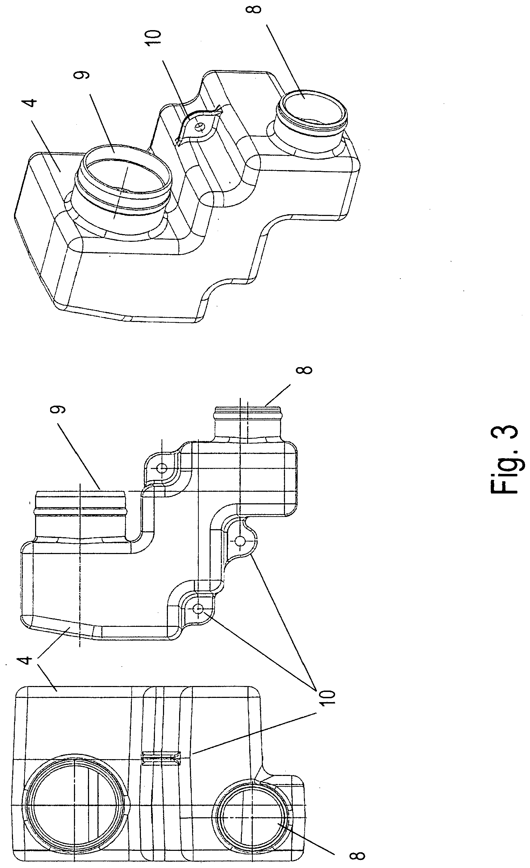

In Figur 3 wird ein treppenförmiger Ausgleichsbehälter 4 in Form eines Luftansaugkastens offenbart. Der Ausgleichsbehälter 4 weist einen Ausgleichsbehältereinlass 8 und einen Ausgleichsbehälterauslass 9 auf. Die Außenfläche des Ausgleichsbehälters 4 ist zwischen Ausgleichsbehältereinlass 8 und Ausgleichsbehälterauslass 9 treppenstufenartig angeordnet, wobei in der ersten Treppenstufe vom Ausgleichsbehältereinlass 8 an in Richtung Ausgleichsbehälterauslass 9 eine Befestigungsfläche 10 zur Befestigung des Ausgleichsbehälters 4 an der Brennkraftmaschine vorgesehen ist. Die Außenfläche des Ausgleichsbehälters 4 auf der dem Ausgleichsbehältereinlass 8 und dem Ausgleichsbehälterauslass 9 gegenüberliegenden Seite ist treppenstufenartig angeordnet, wobei in jeder Treppenstufe eine Befestigungsfläche 10 zur Befestigung des Ausgleichsbehälters 4 an der Brennkraftmaschine vorgesehen ist. Das Gehäuse des Ausgleichsbehälters 4 besteht aus einem wärmeleitfähigen Material, beispielsweise aus Metall. Das Gesamtvolumen des Ausgleichsbehälters beträgt zwischen 2 und 5 Litern. Das Durchmesserverhältnis von Ausgleichsbehältereinlass 8 des Ausgleichsbehälters zum Ausgleichsbehälterauslass 9 beträgt etwa 58/80. In einer nicht dargestellten Ausführungsform weist die Außenfläche des Ausgleichsbehälters 4 zwischen Ausgleichsbehältereinlass 8 und Ausgleichsbehälterauslass 9 lediglich eine Treppenstufe auf, der Ausgleichsbehälter 4 besteht im Wesentlichen aus zwei Ausgleichsvolumina, die mittels einer strömungstechnischen Engstelle im Bereich der Treppenstufe verbunden sind. Diese Ausführungsform des Ausgleichsbehälters 4 weist ein Volumen von etwa 3 Litern auf.

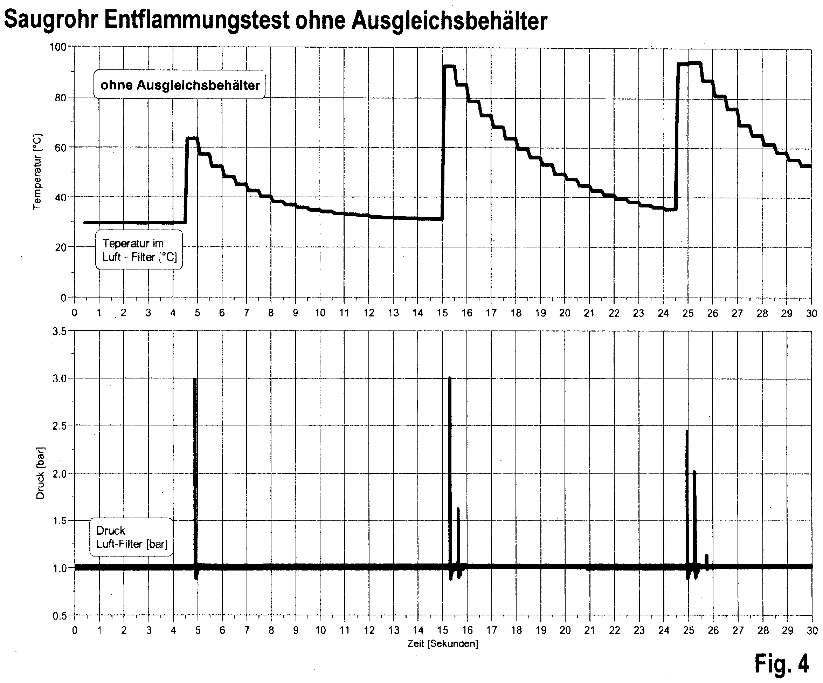

Figur 4 zeigt den über die Zeit aufgetragenen Temperatur- bzw. Druckverlauf im Saugrohr ohne den in Figur 2 dargestellten Ausgleichsbehälter.

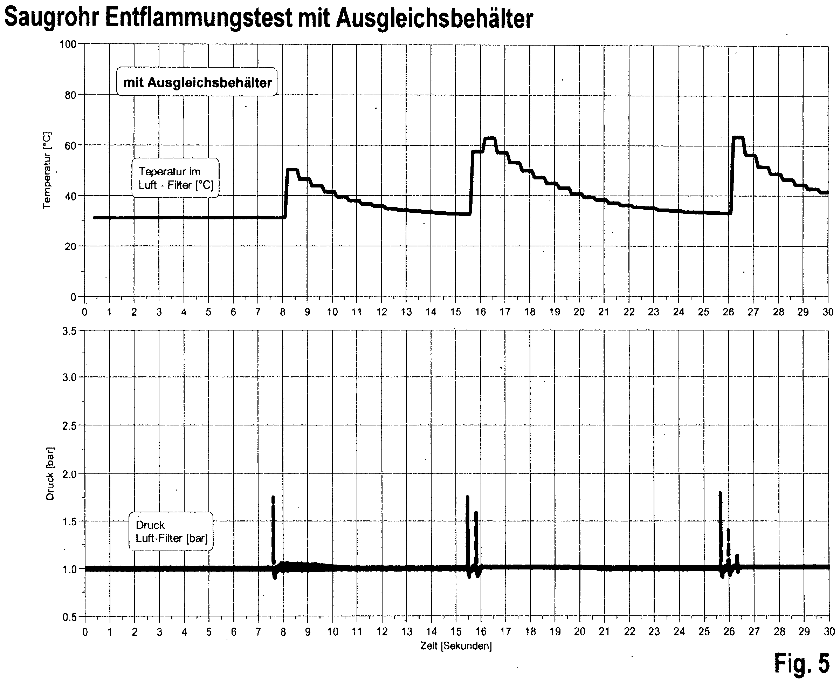

In Figur 5 wird der Temperatur- bzw. Druckverlauf im Saugrohr mit Ausgleichsbehälter über die Zeit an der Brennkraftmaschine aus Figur 5 dargestellt. Hierbei wird deutlich, dass sowohl die Temperatur als auch der Druck im Saugrohr bei der Verwendung eines Ausgleichbehälters sinken.

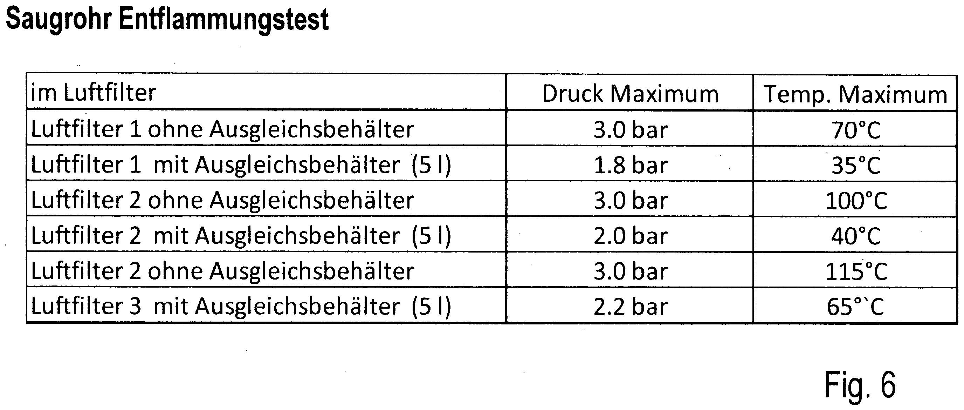

Figur 6 zeigt eine tabellenartige Gegenüberstellung der Druck- und Temperaturwerte im Saugrohr desselben Motors einmal mit und einmal ohne Ausgleichsbehälter.

### Bezugszeichenliste

- 1: Drosselklappe
- 2: Vergaser/ Gas-Mischer/ Gemischbildungsvorrichtung
- 3: Strömungsgleichrichter
- 4: Ausgleichsbehälter
- 5: Luftfilter
- 6: Saugrohr
- 7: Motor
- 8: Ausgleichsbehältereinlass
- 9: Ausgleichsbehälterauslass
- 10: Befestigungsfläche

## Patentansprüche

1. Brennkraftmaschine mit äußerer Gemischbildung, umfassend:
wenigstens einen Abgastrakt und
wenigstens einen Ansaugtrakt,
wobei der Ansaugtrakt wenigstens ein Saugrohr (6), wenigstens eine Drosselklappe (1), wenigstens eine Gemischbildungsvorrichtung (2), wenigstens einen Ausgleichsbehälter (4) und wenigstens einen Luftfilter (5) aufweist,
**dadurch gekennzeichnet,**
**dass** der Ausgleichsbehälter (4) einen Ausgleichsbehältereinlass (8) und einen Ausgleichsbehälterauslass (9) auf einer Seite des Ausgleichsbehälters (4) aufweist und
**dass** eine dem Ausgleichsbehältereinlass (8) und dem Ausgleichsbehälterauslass (9) gegenüberliegende Außenfläche des Ausgleichsbehälters (4) treppenstufenartig ausgebildet ist.

2. Brennkraftmaschine nach Anspruch 1, **dadurch gekennzeichnet, dass** die Drosselklappe (1) zwischen dem Saugrohr (6) und der Gemischbildungsvorrichtung (2) angeordnet ist.

3. Brennkraftmaschine nach einem oder mehreren der vorgenannten Ansprüche, **dadurch gekennzeichnet, dass** die Gemischbildungsvorrichtung (2) als Gas-Mischer ausgeführt ist.

4. Brennkraftmaschine nach einem oder mehreren der vorgenannten Ansprüche, **dadurch gekennzeichnet, dass** die Gemischbildungsvorrichtung (2) als Vergaser ausgeführt ist.

5. Brennkraftmaschine nach einem oder mehreren der vorgenannten Ansprüche, **dadurch gekennzeichnet, dass** der Ausgleichsbehälter (4) aus wenigstens einem wärmeleitfähigen Material besteht.

6. Brennkraftmaschine nach einem oder mehreren der vorgenannten Ansprüche, **dadurch gekennzeichnet, dass** der Durchmesser des Ausgleichsbehälterauslasses (9) größer ist als der Durchmesser des Ausgleichsbehältereinlasses (8).

7. Brennkraftmaschine nach Anspruch 6, **dadurch gekennzeichnet, dass** das Verhältnis des Durchmessers des Ausgleichsbehältereinlasses (8) und des Durchmessers des Ausgleichsbehälterauslasses (9) 58/80 beträgt.

8. Brennkraftmaschine nach einem oder mehreren der vorgenannten Ansprüche, **dadurch gekennzeichnet, dass** die Gemischbildungsvorrichtung (2) und der Ausgleichsbehälter (4) mittels eines flexiblen Rohrelementes verbunden sind.

9. Brennkraftmaschine nach einem oder mehreren der vorgenannten Ansprüche, **dadurch gekennzeichnet, dass** zwischen Ausgleichsbehälter (4) und Gemischbildungsvorrichtung (2) wenigstens ein Strömungsgleichrichter (3) angeordnet ist.

10. Brennkraftmaschine nach Anspruch 9, **dadurch gekennzeichnet, dass** der Strömungsgleichrichter (3) aus einem Metallgewebe und/oder einem Metallgestrick und/oder einem wabenartigen Strangpressprofil besteht.

## Claims

1. An internal combustion engine with external mixture formation, comprising:
at least one exhaust tract and
at least one intake tract,
wherein the intake tract has at least one intake pipe (6), at least one throttling valve (1), at least one mixture formation device (2), at least one compensation vessel (4) and at least one air filter (5),
**characterized in that**
the compensation vessel (4) comprises a compensation vessel inlet (8) and a compensation vessel outlet (9) on one side of the compensation vessel (4) and
an outer surface of the compensation vessel (4) opposite to the compensation vessel inlet (8) and the compensation vessel outlet (9) is designed in a step-shaped manner.

2. The internal combustion engine according to claim 1, **characterized in that** the throttling valve (1) is arranged between the intake pipe (6) and the mixture formation device (2).

3. The internal combustion engine according to one or more of the preceding claims, **characterized in that** the mixture formation device (2) is designed as a gas mixer.

4. The internal combustion engine according to one or more of the preceding claims, **characterized in that** the mixture formation device (2) is designed as a gasifier.

5. The internal combustion engine according to one or more of the preceding claims, **characterized in that** the compensation vessel (4) is made of at least one heat-conducting material.

6. The internal combustion engine according to one or more of the preceding claims, **characterized in that** the diameter of the compensation vessel outlet (9) is greater than the diameter of the compensation vessel inlet (8).

7. The internal combustion engine according to claim 6, **characterized in that** the ratio of the diameter of the compensation vessel inlet (8) and the diameter of the compensation vessel outlet (9) is 58/80.

8. The internal combustion engine according to one or more of the preceding claims, **characterized in that** the mixture formation device (2) and the compensation vessel (4) are connected by a flexible pipe element.

9. The internal combustion engine according to one or more of the preceding claims, **characterized in that** at least one flow rectifier (3) is arranged between the compensation vessel (4) and the mixture formation device (2).

10. The internal combustion engine according to claim 9, **characterized in that** the flow rectifier (3) is made of a metal fabric and/or a woven metal material and/or a honeycomb-like extrusion profile.

## Revendications

1. Moteur à combustion interne à formation de mélange externe, comprenant :
au moins un conduit d'échappement et
au moins un conduit d'admission,
où le conduit d'admission présente au moins un tuyau d'admission (6), au moins un papillon des gaz (1), au moins un dispositif de formation de mélange (2), au moins un réservoir de compensation (4) et au moins un filtre à air (5),
**caractérisé en ce que**
le réservoir de compensation (4) présente une entrée de réservoir de compensation (8) et une sortie de réservoir de compensation (9) sur un côté du réservoir de compensation (4) et
une surface extérieure du réservoir de compensation (4) opposée à l'entrée de réservoir de compensation (8) et à la sortie de réservoir de compensation (9) est réalisée en forme de marches d'escalier.

2. Moteur à combustion interne selon la revendication 1, **caractérisé en ce que** le papillon des gaz (1) est disposé entre le tuyau d'admission (6) et le dispositif de formation de mélange (2).

3. Moteur à combustion interne selon l'une ou plusieurs des revendications précédentes, **caractérisé en ce que** le dispositif de formation de mélange (2) est réalisé sous forme de mélangeur de gaz.

4. Moteur à combustion interne selon l'une ou plusieurs des revendications précédentes, **caractérisé en ce que** le dispositif de formation de mélange (2) est réalisé sous forme de carburateur.

5. Moteur à combustion interne selon l'une ou plusieurs des revendications précédentes, **caractérisé en ce que** le réservoir de compensation (4) est constitué d'au moins un matériau conducteur de chaleur.

6. Moteur à combustion interne selon l'une ou plusieurs des revendications précédentes, **caractérisé en ce que** le diamètre de la sortie de réservoir de compensation (9) est supérieur au diamètre de l'entrée de réservoir de compensation (8).

7. Moteur à combustion interne selon la revendication 6, **caractérisé en ce que** le rapport entre le diamètre de l'entrée de réservoir de compensation (8) et le diamètre de la sortie de réservoir de compensation (9) est de 58/80.

8. Moteur à combustion interne selon l'une ou plusieurs des revendications précédentes, **caractérisé en ce que** le dispositif de formation de mélange (2) et le réservoir de compensation (4) sont reliés au moyen d'un élément tubulaire flexible.

9. Moteur à combustion interne selon l'une ou plusieurs des revendications précédentes, **caractérisé en ce qu'**au moins un redresseur de flux (3) est disposé entre le réservoir de compensation (4) et le dispositif de formation de mélange (2).

10. Moteur à combustion interne selon la revendication 9, **caractérisé en ce que** le redresseur de flux (3) est constitué d'un tissu métallique et/ou d'un tricot métallique et/ou d'un profilé extrudé en nid d'abeilles.
